(19) Europäisches Patentamt
European Patent Office
Office européen des brevets

(11) **EP 4 235 149 A1**

(12) **EUROPÄISCHE PATENTANMELDUNG**

(43) Veröffentlichungstag:
**30.08.2023   Patentblatt 2023/35**

(21) Anmeldenummer: **22158278.6**

(22) Anmeldetag: **23.02.2022**

(51) Internationale Patentklassifikation (IPC):
**G01N 21/27** (2006.01)        **G01N 21/55** (2014.01)
**G06T 15/00** (2011.01)        **G06T 17/00** (2006.01)
**G01N 21/47** (2006.01)

(52) Gemeinsame Patentklassifikation (CPC):
**G01N 21/55; G01N 21/274; G06T 7/00;**
G01N 21/4785

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Carl Zeiss Vision International GmbH
73430 Aalen (DE)**

(72) Erfinder: **Nöll, Tobias
67657 Kaiserslautern (DE)**

(74) Vertreter: **Carl Zeiss AG - Patentabteilung
Carl-Zeiss-Straße 22
73447 Oberkochen (DE)**

(54) **COMPUTERIMPLEMENTIERTES VERFAHREN, COMPUTERPROGRAMM, DATENVERARBEITUNGSSYSTEM UND VORRICHTUNG ZUR BESTIMMUNG DES REFLEKTANZVERHALTENS EINER OBERFLÄCHE EINES OBJEKTES SOWIE SPEICHERMEDIUM MIT DARAUF GESPEICHERTEN INSTRUKTIONEN ZUR BESTIMMUNG DES REFLEKTANZVERHALTENS EINER OBERFLÄCHE EINES OBJEKTES**

(57)     Es wird ein computerimplementiertes Verfahren zur Bestimmung des Reflektanzverhaltens einer Oberfläche (7) eines Objektes (6) bereitgestellt, das folgende Schritte aufweist:
- Bereitstellen von mehreren Bildern des Objektes (6), die sich in einer Aufnahmerichtung und/oder in einer Beleuchtungsrichtung bei der Aufnahme unterscheiden,
- Erstellen von Datensätzen mit Einträgen, die jeweils einen aus den Bildern abgeleiteten Reflektanzwert sowie eine zugeordnete Aufnahmerichtung und eine zugeordnete Beleuchtungsrichtung beschreiben, wobei jeder Datensatzes jeweils einem Punkt der Oberfläche des Objektes (6) zugeordnet ist, und
- Ermitteln fehlender Einträge der Datensätze basierend auf Einträgen bereits erstellter Datensätze.

Fig. 1

**Beschreibung**

Die vorliegende Erfindung betrifft ein computerimplementiertes Verfahren, ein Computerprogramm, ein Datenverarbeitungssystem und eine Vorrichtung zur Bestimmung des Reflektanzverhaltens einer Oberfläche eines Objektes (insbesondere eines Brillenglases, einer Brillenfassung oder einer Brille) sowie ein nichtflüchtiges computerlesbares Speichermedium mit darauf gespeicherten Instruktionen zur Bestimmung des Reflektanzverhaltens einer Oberfläche eines Objektes (insbesondere eines Brillenglases, einer Brillenfassung oder einer Brille).

Die visuelle Erscheinung von Oberflächen ist maßgeblich dadurch bestimmt, wie eintreffendes Licht mit dieser Oberfläche interagiert. Mögliche Interaktionen sind beispielsweise diffuse Streuung (bei rauen Oberflächen), gerichtete Strahlung (bei spiegelnden Oberflächen) oder Eindringen (bei transparenten Oberflächen).

Für opake Oberflächen kann dieses Interaktions- bzw. Reflexionsverhalten mathematisch mittels einer bidirektionalen Reflektanz Distributionsfunktionen (BRDF) beschrieben werden (Literaturstelle [1]: NICODEMUS, FRED E. "Directional reflectance and emissivity of an opaque surface". Applied Optics 4.7 1965, Seiten 767-773). Die BRDF gibt für jeden möglichen Lichteinfallswinkel die Menge an reflektiertem Licht in jede mögliche Beobachtungsrichtung, ist also eine vierdimensionale Funktion (zwei Parameter für Lichteinfallsrichtung und zwei Parameter für Beobachtungsrichtung). Bei allgemeinen Oberflächen ändert sich das Reflektanzverhalten zusätzlich über die Oberfläche und ist somit also zusätzlich noch pro Oberflächenpunkt verschieden. Man spricht von einer SVBRDF ("Specially Varying" BRDF) mit sechs Parametern (zwei Parameter zusätzlich für die Identifikation der jeweiligen Stelle auf der Oberfläche).

Um die SVBRDF zu vermessen, muss eine Oberfläche also aus verschiedenen Beleuchtungsrichtungen beleuchtet werden und von wiederum anderen Richtungen beobachtet werden (bzw. unter verschiedenen Aufnahmerichtungen aufgenommen werden). Ungünstiger Weise kann sich das Reflektanzverhalten beispielsweise für spiegelnde Materialien selbst für kleinste Winkeländerungen stark ändern, so dass für eine Vermessung der Parameterraum dicht abgetastet werden muss und man somit eine extrem hohe Anzahl von Lichtpositionen und Beobachtungsrichtungen benötigt. Um eine SVBRDF dennoch mit einer handhabbaren kleinen Menge an Messungen zu vermessen, wird in der Praxis bisher hauptsächlich auf zwei Konzepte gesetzt:

1) Bei der dichromatischen Separation wird davon ausgegangen, dass das Reflektanzverhalten der gesamten Oberfläche teils aus einem "diffusen" und teils aus einem "spiegelnden" Term besteht. Für den diffusen Term werden starke Änderungen über die Oberfläche zugelassen, da sich dieser auch aus wenigen Winkelkonfigurationen bestimmen lässt. Der spiegelnde Term hingegen wird über die gesamte Oberfläche geteilt, d.h. ist entweder konstant oder es werden nur geringe Änderungen angenommen (Literaturstelle [2]: GEORGHIDIADES, ATHINODOROS S., "Recovering 3-D shape and reflectance from a small number of photographs". Proceedings of the 14th Eurographics workshop on Rendering. Eurographics Association, 2003, Seiten 230-240, Literaturstelle [3]: YU, YIZHOU et al. "Inverse global illumination: Recovering reflectance models of real scenes from photographs". Proceedings of the 26th annual conference on Computer graphics and interactive techniques, ACM Press/Addison-Wesley-Publishing Co. 1999, Seiten 215-224).

Mit dieser Methode können allerdings keine Oberflächen mit sich stark änderndem spiegelndem Verhalten beschrieben werden, welches sie im Allgemeinen sehr einschränkt.

2) Die überwiegende Mehrheit der Methoden geht davon aus, dass eine Oberfläche aus einer nur sehr kleinen Anzahl von Grund- oder Basismaterialien besteht (Literaturstelle [4]: LENSCH, HENDRIK et al. "Image-based reconstruction of spatial appearance and geometric detail". ACM Transactions and Graphis (TOG) 22.2, 2003, Seiten 234-257, Literaturstelle [5]: GOLDMANN, DAN B et al. "Shape and spatially-varying brdfs from photometric stereo". Pattern Analysis and Maching Intelligence, IEEE Transactions on 32.6, 2010, Seiten 1060-1071, Literaturstelle [6]: HOLROYD, MIACHAEL, LAWRENCE, JASON, and ZICKLER, TODD "A coaxial optical scanner for synchronous acquisition of 3D geometry and surface reflectance". ACM Transactions on Graphics (TOG) 29.4, 2010, Seite 99, Literaturstelle [7]: Giljoo Nam, Joo Ho Lee, Diego Gutierrez, and Min H. Kim "Practical SVBRDF acquisition of 3D objects with unstructured flash photography" ACM Trans. Graph. 37.6, Artikel 267, December 2018.

Ein an einer Stellte gemessenes Verhalten kann also auf eine andere Stelle der Oberfläche übertragen werden, wenn beide Stellen demselben Basismaterial zugeordnet sind. Dadurch wird die Anzahl an zur SVBRDF-Vermessung benötigten Bildern maßgeblich reduziert. Die Zuordnung der Basismaterialien erfolgt üblicherweise anhand der Farbigkeit der Oberfläche, d.h. es wird davon ausgegangen, dass zwei Stellen mit ähnlicher Farbe dasselbe Basismaterial aufweisen. Die Hauptschwierigkeit bei diesen Verfahren besteht darin, die korrekte Anzahl der Basismaterialien sowie ihre konkreten Ausdehnungen zu erkennen und die entsprechende Zuordnung vom Oberflächenpunkt zum Basismaterial vorzunehmen. Jedes Basismaterial samt seiner zugeordneten Ausdehnung kann als Segment der Oberfläche bezeichnet werden, so dass man auch diesen Ansatz als Segmentierungsproblem bezeichnen kann, bei dem die unterschiedlichen Segmente der Oberfläche zu ermitteln sind und für die ermittelten Segmente möglichst wenig Bilder für die SVBRDF-Vermessung aufzunehmen.

Ausgehend hiervon und insbesondere ausgehend von dem Verfahren der genannten Literaturstelle [4] ist es Aufgabe der Erfindung, ein computerimplementiertes Verfahren zur Bestimmung des Reflektanzverhaltens einer Oberfläche eines Objektes so weiterzubilden, dass eine verbesserte Bestimmung möglich ist. Ferner soll ein Computerprogramm, ein Datenverarbeitungssystem und eine Vorrichtung zur Bestimmung des Reflektanzverhaltens einer Oberfläche eines Objektes und ein Speichermedium mit darauf gespeicherten Instruktionen zur Bestimmung des Reflektanzverhaltens einer Oberfläche eines Objektes bereitgestellt werden.

Die Erfindung ist in den unabhängigen Ansprüchen definiert. Vorteilhafte Ausgestaltungen sind in den abhängigen Ansprüchen angegeben.

Bei dem computerimplementierten Verfahren zur Bestimmung des Reflektanzverhaltens einer Oberfläche eines Objektes werden mehrere Bilder des Objektes bereitgestellt, wobei sich die Bilder in einer Aufnahmerichtung und/oder in einer Beleuchtungsrichtung bei der Aufnahme unterscheiden. Es werden Datensätze mit Einträgen erstellt, die jeweils einen aus den Bildern abgeleiteten Reflektanzwert sowie eine zugeordnete Aufnahmerichtung und eine zugeordnete Beleuchtungsrichtung beschreiben, wobei jeder Datensatz jeweils einem Punkt der Oberfläche des Objektes zugeordnet ist. Ferner werden fehlende Einträge für Datensätze für Punkte der Oberfläche basierend auf Einträgen bereits erstellten Datensätzen ermittelt. Das Ermitteln der fehlenden Einträge kann ein Berechnen, ein Kombinieren und/oder sonstige auszuführende Schritte umfassen.

Somit können schon aus relativ wenigen Bildern zuerst Datensätze erstellt werden, bei denen die Reflektanzwerte aus den Bildern abgeleitet sind. Dabei handelt es sich somit um gemessene Reflektanzwerte. Die ermittelten fehlenden Einträge der Datensätze basieren dann auf den bereits erstellten Datensätzen (bzw. deren Einträge) und es handelt sich somit um keine gemessenen Reflektanzwerte, sondern z.B. um berechnete Einträge der Datensätze.

Dies führt in vorteilhafter Art und Weise dazu, dass schon wenige Bilder ausreichen, um eine sehr gute Bestimmung des Reflektanzverhaltens der Oberfläche des Objektes zu erzielen. Darüber hinaus ist die aufwändige und fehlerbehaftete Segmentierung wie bei dem bisher bekannten Vorgehen nicht notwendig, so dass auch eine sehr gute Bestimmung des Reflektanzverhaltens der Oberfläche des Objektes erreicht werden kann. Damit können z.B. für Oberflächenpunkte, die evtl. nicht aufgenommen bzw. nicht in einer bestimmten Konfiguration beleuchtet wurden und damit auf den Aufnahmen nicht vorhanden sind, die Reflektanzwerte ermittelt werden. Der Schritt des Einstellens fehlender Einträge der Datensätze erfolgt somit bevorzugt ohne einen Segmentierungsschritt.

Unter Reflektanz wird hier insbesondere der Reflexionsgrad und daher das Verhältnis der reflektierten Strahlungsleistung zur einfallenden Strahlungsleistung verstanden. Unter Reflektanzwert wird hier insbesondere ein Wert verstanden, der die Reflektanz beschreibt. Unter Reflektanzverhalten wird hier insbesondere verstanden, wie das Licht von der Oberfläche des Objektes reflektiert und/oder gestreut wird. In anderen Worten, das Reflektanzverhalten beschreibt den optischen Eindruck, den eine Person bei Betrachten der Oberfläche aufgrund von reflektierenden, streuenden und/oder absorbierenden Eigenschaften der Oberfläche gewinnt.

Unter Beleuchtungsrichtung wird hier insbesondere verstanden, unter welchem Einfallswinkel (bezogen auf ein vorgegebenes Koordinatensystem) die Oberfläche des Objektes bei der Aufnahme mit Licht beleuchtet wird. Unter Aufnahmerichtung (bezogen auf das vorgegebene Koordinatensystem) wird hier insbesondere verstanden, unter welchem Winkel die Aufnahme der Oberfläche des Objektes erfolgt.

Bei dem Ermitteln fehlender Einträge der Datensätze für Punkte der Oberfläche des Objekts (was nachfolgend auch als Ermitteln weiterer Datensätze für Punkte der Oberfläche des Objekts bezeichnet wird) basierend auf Einträgen bereits erstellten Datensätzen kann ein Ähnlichkeitsmaß zu den aus den Bildern abgeleiteten Reflektanzwerten berücksichtigt werden. Bei dem Ähnlichkeitsmaß kann mindestens eines ausgewählt aus der Gruppe von Ähnlichkeit der Winkelkonfiguration, räumlicher Distanz und photometrische Ähnlichkeit berücksichtigt werden.

Bei der Ähnlichkeit der Winkelkonfiguration kann es sich insbesondere um die Abweichung des Winkels der Aufnahmerichtung und/oder die Abweichung des Winkels der Beleuchtungsrichtung handeln. Bei der räumlichen Distanz kann es sich insbesondere um die Distanz über die Oberfläche handeln (geodätische Distanz). Bei der photometrischen Ähnlichkeit kann es sich insbesondere um die Ähnlichkeit der aus den Bildern abgeleiteten Reflektanzwerte handeln. Je geringer der jeweilige Unterschied ist, desto eher wird die Ähnlichkeit angenommen.

Ferner kann beim Ermitteln fehlender Einträge der Datensätze für Punkte der Oberfläche des Objekts basierend auf Einträgen bereits erstellten Datensätzen eine Mittelwertberechnung oder eine gewichtete Mittelwertberechnung der aus den Bildern abgeleiteten Reflektanzwerten durchgeführt werden.

Die Mittelwertberechnung kann insbesondere die Berechnung des arithmetischen Mittels sein. Bei der gewichteten Mittelwertberechnung kann ein weiterer Parameter berücksichtigt werden, wie z.B. der Abstand zum Punkt der Oberfläche, für den der weitere Datensatz berechnet werden soll. Je größer der Abstand ist, desto geringer kann der Einfluss eines schon bekannten Reflektanzwertes sein.

Durch die Mittelwertberechnung lassen sich fehlerhafte Werte besser vermeiden, da einzelne falsche Reflektanzwerte weniger berücksichtigt werden.

Es kann ferner eine Glättung der Reflektanzwerte, die aus den Bildern abgeleitet wurden, durchgeführt werden.

Hierunter wird insbesondere verstanden, dass eine Mittelung der gemessenen Werte erfolgt, um so unerwünschte Ausreißer besser korrigieren zu können. Man kann auch sagen, dass die abgeleiteten Reflektanzwerte zur Glättung einer Tiefpassfilterung unterzogen werden.

Der Schritt des Bereitstellens der mehreren Bilder des Objekts kann den Schritt der Beleuchtung und der Durchführung der Aufnahme umfassen. Dabei können die Bilder mehrere Pixel aufweisen, die dann jeweils entsprechenden Bildpunkten und einer Kombination aus Aufnahmerichtung und Beleuchtungsrichtung zugeordnet werden.

Bei dem erfindungsgemäßen computerimplementierten Verfahren zur Bestimmung des Reflektanzverhaltens einer Oberfläche eines Objektes können die Datensätze so parametrisiert werden, dass ein vierdimensionaler Winkelanteil mit zwei Parametern für die Beleuchtungsrichtung und zwei Parametern für die Aufnahmerichtung sowie ein zweidimensionaler Ortsanteil mit zwei Parametern für den entsprechenden Punkt der Oberfläche des Objekts vorliegt. Durch die Datensätze wird eine Diskretisierung dieser Funktion erreicht.

Ferner kann basierend auf den Datensätzen eine kontinuierliche räumlich variierende bidirektionale Reflektanzdistributionsfunktion berechnet werden. Hierunter wird insbesondere verstanden, dass die Funktion stetig ist. Damit lassen sich insbesondere fotorealistische Darstellungen des Objektes erstellen.

Mit dem erfindungsgemäßen Verfahren (einschließlich seiner Weiterbildung) kann mittels der Datensätze das Reflektanzverhalten der Oberfläche des Objekts bestimmt werden.

Bei dem Objekt kann es sich insbesondere um ein Brillenglas, eine Brillenfassung oder um eine Brille handeln.

Bei dem erfindungsgemäßen computerimplementierten Verfahren kann zur Kalibrierung mindestens eine der Schrittfolgen a) oder b) durchgeführt werden. Bei der Schrittfolge a) wird mindestens eine erste Kalibrieraufnahme eines Kalibrierobjekts mit mehreren unterscheidbaren Markern an relativ zueinander bekannten Positionen ausgewertet, wird mindestens eine zweite Kalibrieraufnahme des Kalibrierobjekts, das bei der Aufnahme mit einem Muster beleuchtet war, ausgewertet und wird dann die die Kalibrierung basierend auf den Auswertungen der ersten und zweiten Kalibrieraufnahme(n) durchgeführt. Bei der Schrittfolge b) wird mindestens eine erste Kalibrieraufnahme eines Kalibrierobjekts mit mehreren unterscheidbaren Kugeln an relativ zueinander bekannten Position ausgewertet, wobei die Mittelpunkt der Kugeln bestimmt werden, und wird die Kalibrierung basierend auf der bzw. den Auswertung(en) der ersten Kalibrieraufnahme(n) durchgeführt. Bei einer solchen Kalibrierung wird eine verbesserte Bestimmung des Reflektanzverhaltens der Oberfläche des Objekts ermöglicht.

Bei den computerimplementierten Verfahren kann zur Erstellung der Datensätze eine bidirektionale Reflektanzdistributionsfunktion, die für jeden Punkt der Oberfläche des Objekts für mögliche Lichteinfallswinkel eines einfallenden Strahls jeweils die Menge an reflektiertem Licht eines ausfallenden Strahls jede mögliche Beobachtungsrichtung jeweils als BRDF-Wert beschreibt, bereitgestellt werden, so dass die Reflektanzdistributionsfunktion eine sechsdimensionale Funktion ist, die einen vierdimensionalen Winkelanteil mit zwei Parametern für die Lichteinfallsrichtung und zwei Parametern für die Beobachtungsrichtung sowie einen zweidimensionalen Ortsanteil mit zwei Parametern für den entsprechenden Punkt der Oberfläche des Objekts aufweist.

Durch diese Parametrisierung wird eine gute Beschreibung des Reflektanzverhaltens der Oberfläche des Objekts ermöglicht.

Bei dem computerimplementierten Verfahren kann ferner bei einer bidirektionalen Reflektanzdistributionsfunktion (BRDF), die für jeden Punkt der Oberfläche des Objekts für mögliche Lichteinfallswinkel eines einfallenden Strahls jeweils die Menge an reflektiertem Licht eines ausfallenden Strahls in jede mögliche Beobachtungsrichtung jeweils als BRDF-Wert beschreibt, so dass die Reflektanzdistributionsfunktion (SVBRDF) eine sechsdimensionale Funktion ist, die einen vierdimensionalen Winkelanteil mit zwei Parametern für die Lichteinfallsrichtung und zwei Parametern für die Beobachtungsrichtung sowie einen zweidimensionalen Ortsanteil mit zwei Parametern für den entsprechenden Punkt der Objektoberfläche aufweist, der vierdimensionale Winkelanteil der Reflektanzdistributionsfunktion mittels einer Rusinkiewicz-Parametrisierung so parametrisiert werden, dass als transformierte Koordinatenachsen Polarwinkel und Azimutwinkel eines Mittelvektors und Polarwinkel und Azimutwinkel eines Differenzvektors vorliegen, wobei der Mittelvektor der mittlere Vektor zwischen einfallendem und ausfallendem Strahl und der Differenzvektor die Differenz von einfallendem Strahl und Mittelvektor ist. Es wird dann eine Diskretisierung des von den transformierten Koordinatenachsen aufgespannten Raums mittels einer Koordinaten-Gitterstruktur mit Gitterpunkten durchgeführt, wobei der Gitterabstand für die Koordinatenachse Polarwinkel des Mittelvektors geringer ist als für die restlichen transformierten Koordinatenachsen. Ferner wird eine Reflektanzmessung für jeden Gitterpunkt der Oberfläche des Objektes zur Messung des BRDF-Werts durchgeführt. Es wird eine BRDF-Tabelle für jeden Gitterpunkt mit den gemessenen BRDF-Werten aus den Datensätzen erstellt und die BRDF-Tabellen für nicht gemessene Punkte der Oberfläche werden durch Berechnen der BRDF-Werte der nicht gemessenen Punkte der Oberfläche aus den gemessenen BRDF-Werten vervollständigt, um so das Reflektanzverhalten der Oberfläche des Objektes zu beschreiben. Damit können selbst Oberflächen mit stark änderndem Reflektanzverhalten vermessen werden und das Reflektanzverhalten der Oberfläche kann beschrieben werden, wobei vollständig auf die häufig fehlerbehaftete Segmentierung verzichtet werden kann. Es ist somit nicht nötig, eine Anzahl von Basismaterialien zu erkennen bzw. dies in irgendeiner Form zu bestimmen. Auch entfällt eine entsprechende Zuweisung eines Oberflächenpunktes zu einem bestimmten Basismaterial. Dies wird insbesondere durch den Schritt des Berechnens der BRDF-Werte der nicht gemessenen Punkte der Oberfläche erreicht.

Es wird ferner ein Computerprogramm zur Bestimmung des Reflektanzverhaltens einer Oberfläche eines Objekts basierend auf mehreren bereitgestellten Bildern des Objekts, die sich in einer Aufnahmerichtung und/oder Beleuchtungsrichtung der Aufnahme unterscheiden, bereitgestellt, wobei das Computerprogramm Instruktionen umfasst, die, wenn sie auf einem Computer ausgeführt werden, den Computer dazu veranlassen, Datensätze mit Einträgen zu erstellen, die jeweils einen aus den Bildern abgeleiteten Reflektanzwert sowie eine zugeordnete Aufnahmerichtung und eine zugeordnete Beleuchtungsrichtung beschreiben, wobei jeder Datensatz jeweils einem Punkt der Oberfläche des Objekts zugeordnet ist. Ferner wird der Computer durch die Instruktionen dazu veranlasst, fehlende Einträge der Datensätze für Punkte der Oberfläche des Objekts basierend auf Einträgen bereits erstellten Datensätzen zu ermitteln.

Damit kann in vorteilhafter Art und Weise mit nur wenigen Bildern eine sehr gute Bestimmung des Reflektanzverhaltens einer Oberfläche des Objekts erzielt werden.

Es wird ferner ein nicht flüchtiges computerlesbares Speichermedium mit darauf gespeicherten Instruktionen zum Bestimmen des Reflektanzverhaltens einer Oberfläche eines Objekts basierend auf mehreren bereitgestellten Bildern des Objekts, die sich in einer Aufnahmerichtung und/oder Beleuchtungsrichtung bei der Aufnahme unterscheiden, bereitgestellt, wobei die Instruktionen, wenn sie auf einem Computer ausgeführt werden, den Computer dazu veranlassen, Datensätze mit Einträgen zu erstellen, die jeweils einen aus den Bildern abgeleiteten Reflektanzwert sowie eine zugeordnete Aufnahmerichtung und eine zugeordnete Beleuchtungsrichtung beschreiben, wobei jeder Datensatz jeweils zu einem Punkt der Oberfläche des Objekts zugeordnet ist. Ferner wird der Computer durch die Instruktionen dazu veranlasst, fehlende Einträge der Datensätze für Punkte der Oberfläche des Objekts basierend auf Einträgen bereits erstellten Datensätzen zu ermitteln.

Damit kann in vorteilhafter Weise schon mit wenigen Bildern eine sehr gute Bestimmung des Reflektanzverhaltens der Oberfläche des Objekts erzielt werden.

Des Weiteren wird ein Datenverarbeitungssystem zur Bestimmung des Reflektanzverhaltens einer Oberfläche eines Objekts basierend auf mehreren bereitgestellten Bildern des Objekts, die sich in einer Aufnahmerichtung und/oder Beleuchtungsrichtung bei der Aufnahme unterscheiden, bereitgestellt, wobei das Datenverarbeitungssystem einen Prozessor und einen Speicher umfasst. Der Prozessor ist dazu ausgestaltet, basierend auf Instruktionen eines im Speicher gespeicherten Computerprogramms Datensätze mit Einträgen zu erstellen, die jeweils einen aus den Bildern abgeleiteten Reflektanzwert sowie eine zugeordnete Aufnahmerichtung und eine zugeordnete Beleuchtungsrichtung beschreiben, wobei jeder Datensatz jeweils einem Punkt der Oberfläche des Objekts zugeordnet ist. Ferner ist der Prozessor dazu ausgestaltet, basierend auf den Instruktionen des im Speicher gespeicherten Computerprogramms fehlende Einträge der Datensätze für Punkte der Oberfläche des Objekts basierend auf Einträgen bereits erstellten Datensätzen zu ermitteln.

Damit kann in vorteilhafter Weise schon mit wenigen Bildern eine sehr gute Bestimmung des Reflektanzverhaltens der Oberfläche des Objekts erzielt werden.

Es wird ferner eine Vorrichtung zur Bestimmung des Reflektanzverhaltens einer Oberfläche eines Objekts bereitgestellt, wobei die Vorrichtung eine Steuereinheit und eine Detektionseinheit umfasst, wobei die Detektionseinheit mehrere Bilder des Objekts aufnimmt, die sich in einer Aufnahmerichtung und/oder einer Beleuchtungsrichtung bei der Aufnahme unterscheiden, und wobei die Steuereinheit Datensätze mit Einträgen erstellt, die jeweils einen aus den Bildern abgeleiteten Reflektanzwert sowie eine zugeordnete Aufnahmerichtung und eine zugeordnete Beleuchtungsrichtung beschreiben, wobei jeder Datensatz jeweils einem Punkt der Oberfläche des Objekts zugeordnet ist, und fehlende Einträge der Datensätze für Punkte des Objekts basierend auf Einträgen bereits erstellten Datensätzen ermittelt. Mittels der so erstellten Datensätze kann das Reflektanzverhalten der Oberfläche eines Objekts bestimmt werden.

Durch das erfindungsgemäße Verfahren können selbst Oberflächen mit stark änderndem Reflektanzverhalten vermessen werden und das Reflektanzverhalten der Oberfläche beschrieben werden, wobei vollständig auf die häufig fehlerbehaftete Segmentierung verzichtet werden kann. Im Konkreten ist es nicht nötig, eine Anzahl von Basismaterialien zu erkennen bzw. diese in irgendeiner Form zu bestimmen. Auch entfällt eine entsprechende Zuweisung eines Oberflächenpunktes zu einem bestimmten Basismaterial. Dies wird insbesondere durch den Schritt des Berechnens weiterer Datensätze erreicht.

Es wird ferner ein Verfahren zur Bestimmung des Reflektanzverhaltens einer Oberfläche eines Objektes bereitgestellt, das die folgenden Schritte aufweist:

Bereitstellen einer bidirektionalen Reflektanzdistributionsfunktion (BRDF), die für jeden Punkt der Oberfläche des Objekts für mögliche Lichteinfallswinkel eines einfallenden Strahls jeweils die Menge an reflektiertem Licht eines ausfallenden Strahls in jede mögliche Beobachtungsrichtung jeweils als BRDF-Wert beschreibt, so dass die Reflektanzdistributionsfunktion (SVBRDF) eine sechsdimensionale Funktion ist, die einen vierdimensionalen Winkelanteil mit zwei Parametern für die Lichteinfallsrichtung und zwei Parametern für die Beobachtungsrichtung sowie einen zweidimensionalen Ortsanteil mit zwei Parametern für den entsprechenden Punkt der Objektoberfläche aufweist. Es werden folgende Schritte weiter durchgeführt:

Parametrisieren des vierdimensionalen Winkelanteils der Reflektanzdistributionsfunktion (SVBRDF) mittels einer Rusinkiewicz-Parametrisierung so, dass als transformierten Koordinatenachsen Polarwinkel ($\Theta_h$) und Azimutwinkel ($\Phi_h$) eines Mittelvektor ($\vec{h}$) und Polarwinkel ($\Theta_d$) und Azimutwinkel ($\Phi_d$) eines Differenzvektors ($\vec{d}$) vorliegen, wobei der Mittelvektor ($\vec{h}$) der mittlere Vektor zwischen einfallenden Strahl und ausfallenden Strahl und der Differenzvektor ($\vec{d}$) die Differenz von einfallenden Strahl und Mittelvektor ($\vec{h}$) ist,

Diskretisieren des von den transformierten Koordinatenachsen aufgespannten Raums mittels einer Koordinaten-Gitterstruktur mit Gitterpunkten, wobei der Gitterabstand für die Koordinatenachse Polarwinkel ($\Theta_h$) des Mittelvektors ($\vec{h}$) geringer sein kann als für die restlichen transformierten Koordinatenachsen ($\Phi_h$, $\Theta_d$, $\Phi_d$) ,

Durchführen einer Reflektanzmessung für jeden Gitterpunkt an einer vorbestimmten Anzahl von Punkten der Oberfläche des Objektes zur Messung des BRDF-Wertes, wobei die vorbestimmten Anzahl von Punkten der Oberfläche kleiner als die Gesamtzahl von Punkten zur Beschreibung der Oberfläche des Objektes ist und bei den unterschiedlichen Gitterpunkten unterschiedlich sein kann, Erstellen einer BRDF-Tabelle für jeden Gitterpunkt mit den gemessenen BRDF-Werten und Vervollständigen der BRDF-Tabellen für die nicht gemessenen Punkte der Oberfläche durch Ermitteln (z.B. Berechnen) der BRDF-Werte der nicht gemessenen Punkte der Oberfläche aus den gemessenen BRDF-Werten, um so das Reflektanzverhalten der Oberfläche des Objektes zu beschreiben.

Insbesondere können die Datensätze zu den BRDF-Tabellen zusammengefasst werden.

Bei der Berechnung der BRDF-Werte der nicht gemessenen Punkte der Oberfläche aus den gemessenen BRDF-Werten kann ein Ähnlichkeitsmaß zu den gemessenen Punkten berücksichtigt werden.

Als Ähnlichkeitsmaß kann mindestens eines ausgewählt aus der Gruppe von Ähnlichkeit der Winkelkonfiguration, räumlicher Distanz (z.B. über die Oberfläche) und photometrischer Ähnlichkeit berücksichtigt werden.

Bei der Ähnlichkeit der Winkelkonfiguration nimmt insbesondere die Ähnlichkeit mit Abnahme der Distanz zu, bei der räumlichen Distanz wird die Ähnlichkeit insbesondere umso höher, je niedriger die Distanz ist, und bei der photometrischen Ähnlichkeit steigt insbesondere die Ähnlichkeit mit abnehmender Distanz.

Es kann eine Mittelwertberechnung oder eine gewichtete Mittelwertberechnung bei der Berechnung der BRDF-Werte der nicht gemessene Punkt der Oberfläche aus den gemessenen BRDF-Werten durchgeführt werden.

Es kann ferner eine Glättung der gemessenen BRDF-Werte bei der Erstellung der BRDF-Tabellen für jeden Gitterpunkt mit den gemessenen BRDF-Werten durchgeführt werden.

Ferner kann basierend auf den vervollständigten BRDF-Tabellen eine kontinuierliche bidirektionale Reflektanzdistributionsfunktion berechnet werden.

Zur Berechnung der kontinuierlichen bidirektionalen Reflektanzdistributionsfunktion kann eine multivariate Interpolation (also eine Interpolation für eine Funktion mit mehreren Variablen) oder eine Parameterschätzung des parametrisierten Reflektanzdistributionsfunktion durchgeführt werden.

Es wird ferner eine Vorrichtung zur Bestimmung des Reflektanzverhaltens einer Oberfläche eines Objektes bereitgestellt, wobei die Vorrichtung eine Steuereinheit und eine Detektionseinheit umfasst, wobei die Steuereinheit eine bidirektionale Reflektanzdistributionsfunktion (BRDF) bereitstellt, die für jeden Punkt der Oberfläche des zu vermessenden Objekts für mögliche Lichteinfallswinkel eines einfallenden Strahls jeweils die Menge an reflektiertem Licht eines ausfallenden Strahls in jede mögliche Beobachtungsrichtung jeweils als BRDF-Wert beschreibt, so dass die Reflektanzdistributionsfunktion (SVBRDF) eine sechsdimensionale Funktion ist, die einen vierdimensionalen Winkelanteil mit zwei Parametern für die Lichteinfallsrichtung und zwei Parametern für die Beobachtungsrichtung sowie einen zweidimensionalen Ortsanteil mit zwei Parametern für den entsprechenden Punkt der Objektoberfläche aufweist,

wobei die Steuereinheit den vierdimensionalen Winkelanteil der Reflektanzdistributionsfunktion (SVBRDF) mittels der Rusinkiewicz-Parametrisierung so parametrisiert, dass als transformierten Koordinatenachsen Polarwinkel ($\Theta_h$) und Azimutwinkel ($\Phi_h$) eines Mittelvektor ($\overline{h}$) und Polarwinkel ($\Theta_d$) und Azimutwinkel ($\Phi_d$) eines Differenzvektors ($\overline{d}$) vorliegen, wobei der Mittelvektor ($\overline{h}$) der mittlere Vektor zwischen einfallenden Strahl und ausfallenden Strahl und der Differenzvektor ($\overline{d}$) die Differenz von einfallenden Strahl und Mittelvektor ($\overline{h}$) ist, und den von den transformierten Koordinatenachsen aufgespannten Raums mittels einer Koordinaten-Gitterstruktur mit Gitterpunkten diskretisiert, wobei der Gitterabstand für die Koordinatenachse Polarwinkel ($\Theta_h$) des Mittelvektors ($\overline{h}$) geringer ist als für die restlichen transformierten Koordinatenachsen ($\Theta_h$, $\Theta_d$, $\Phi_d$),

wobei die Detektionseinheit eine Reflektanzmessung für jeden Gitterpunkt an einer vorbestimmten Anzahl von Punkten der Oberfläche des zu vermessenden Objektes zur Messung des BRDF-Wertes durchführt, wobei die vorbestimmten Anzahl von Punkten der Oberfläche kleiner als die Gesamtzahl von Punkten zur Beschreibung der Oberfläche des zu vermessenden Objektes ist und bei den unterschiedlichen Gitterpunkten unterschiedlich sein kann,

wobei die Steuereinheit eine BRDF-Tabelle für jeden Gitterpunkt mit den gemessenen BRDF-Werten erstellt und

die BRDF-Tabellen für die nicht gemessenen Punkte der Oberfläche durch Ermitteln (z.B. Berechnen) der BRDF-Werte der nicht gemessenen Punkte der Oberfläche aus den gemessenen BRDF-Werten vervollständigt, um so das Reflektanzverhalten der Oberfläche des zu vermessenden Objektes zu beschreiben.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Die erfindungsgemäße Vorrichtung kann in gleicher Weise wie das erfindungsgemäße Verfahren weitergebildet werden (dies gilt auch umgekehrt).

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbespiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. Von den Figuren zeigen:

Fig. 1 eine schematische Ansicht einer Ausführungsform der erfindungsgemäßen Vorrichtung,

Fig. 2 eine schematische Darstellung zur Erläuterung der Kugelkoordinaten für den einfallenden Strahl 9 und den ausfallenden Strahl 12, und

Fig. 3 eine Darstellung gemäß Fig. 2 zur Erläuterung der durchgeführten Rusinkiewicz-Parametrisierung.

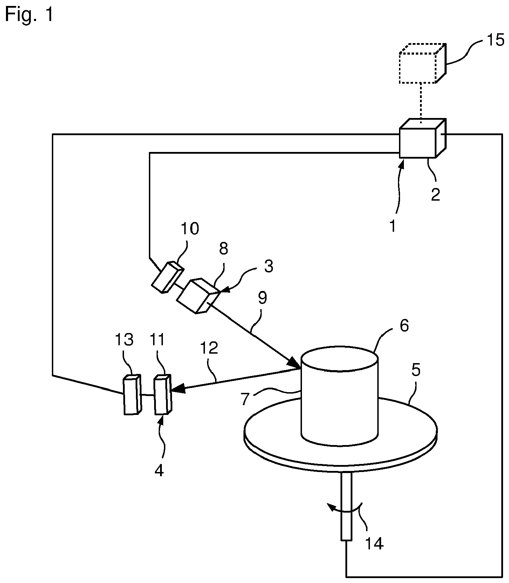

Bei dem in Fig. 1 gezeigten Ausführungsbeispiel eines 3D-Digitalisierungssystem 1 (das auch als Messsystem 1 oder als Vorrichtung 1 zur Bestimmung des Reflektanzverhaltens einer Oberfläche eines Objektes bezeichnet werden kann) umfasst dieses, eine Steuereinheit 2, eine im Raum positionierbare Beleuchtungseinheit 3, eine im Raum positionierbare Detektionseinheit 4 sowie einen Halter 5, auf dem ein zu digitalisierendes Objekt 6 positioniert ist. Der Halter 5 kann z.B. als drehbare Glasplatte ausgebildet sein.

Das 3D-Digitalisierungssystem 1 ist insbesondere so ausgebildet, dass damit eine Beschreibung des Reflektanzverhaltens der Oberfläche 7 des Objektes 6 bestimmt werden kann.

Die Beleuchtungseinheit 3 weist eine Lichtquelle 8, die einen Lichtstrahl 9 (einfallender Strahl) auf die Oberfläche 7 des Objektes 6 richten kann, sowie eine erste Bewegungseinheit 10 auf, die die Position der Lichtquelle 8 im Raum (und somit Richtung des Lichtstrahls 9 und Auftreffpunkt des Lichtstrahls 9 auf der Oberfläche 7) einstellen und ändern kann. Die Detektionseinheit 4 umfasst einen Detektor 11 zur Detektion des von der Oberfläche 7 reflektierten Lichtstrahls 12 sowie eine zweite Bewegungseinheit 13 auf, mit der die Position des Detektors 11 im Raum eingestellt und geändert werden kann. Der Halter 5 ist drehbar, wie durch den Pfeil 14 angedeutet ist. Somit kann die Oberfläche 7 des Objektes 6 an unterschiedlichen Stellen mit unterschiedlichen Winkeln beleuchtet und die Reflexion bzw. Streuung unter unterschiedlichen Winkeln detektiert werden.

Die Steuereinheit 2 kann alle nachfolgend beschriebenen Berechnungs- und Auswerteschritte ausführen. Es ist jedoch auch möglich, dass die Steuereinheit 2 nur die nachfolgend beschriebenen Messschritte steuert und die dabei gewonnenen Daten an eine separate Berechnungseinheit 15, wie in Fig. 1 gestrichelt angedeutet ist, überträgt und die Berechnungseinheit 15 die Berechnungs- und Auswerteschritte durchführt. Die Berechnungseinheit 15 kann ein Computer mit einem Prozessor sein, gleiches gilt für die Steuereinheit 2.

Insbesondere für opake Oberflächen 7 kann dieses Interaktions- bzw. Reflektanzverhalten mathematisch mittels einer bidirektionalen Reflektanzdistributionsfunktion (BRDF) beschrieben werden (Literaturstelle [1]). Die BRDF gibt für jeden möglichen Lichteinfallswinkel die Menge an reflektiertem Licht (BRDF-Wert) in jede mögliche Beobachtungsrichtung. Sie ist somit grundsätzlich eine vierdimensionale Funktion mit zwei Parametern für die Lichteinfallsrichtung und zwei Parametern für die Beobachtungsrichtung. Da sie bei Oberflächen 7 im Allgemeinen nicht konstant ist sondern sich noch zusätzlich vom Ort an der Oberfläche 7 (also vom Oberflächenpunkt) unterscheiden kann, weist die BRDF noch zwei zusätzliche Parameter für die Identifikation der jeweiligen Stelle auf der Oberfläche 7 auf, so dass die bidirektionale Reflektanzdistributionsfunktion eine sechsdimensionale Funktion ist, die einen vierdimensionalen Winkelanteil mit zwei Parametern für die Lichteinfallsrichtung und zwei Parametern für die Beobachtungsrichtung sowie einen zweidimensionalen Ortsanteil mit zwei Parametern für die entsprechenden Punkte der Objektoberfläche ist. In diesem Fall kann die bidirektionale Reflektanzdistributionsfünktion auch als räumlich variierende bidirektionale Reflektanzdistributionsfunktion (z.B. specially varying BRDF oder SVBDF) bezeichnet werden.

Um das Reflektanzverhalten der Oberfläche 7 des Objektes 6 gut beschreiben zu können, auch wenn die Oberfläche 7 ein lokal stark variierendes Reflektanzverhalten aufweist, wird bei der sechsdimensionalen bidirektionalen Reflektanzdistributionsfunktion der vierdimensionale Winkelanteil mittels der Rusinkiewicz-Parametrisierung so parametrisiert, dass als transformierte Koordinatenachsen Polarwinkel $\theta_h$ und Azemutwinkel $\Phi_h$ eines Mittelvektors h und Polarwinkeln $\theta_d$ und Azemutwinkel $\Phi_d$ ein Differenzvektors d vorliegen. Der Mittelvektor h ist der mittlere Vektor zwischen einfallendem Strahl 9 und ausfallendem Strahl 12 und der Differenzvektor d ist die Differenz von einfallendem Strahl 9 und Mittelvektor h (der Mittelvektor h sowie der Differenzvektor d werden hier jeweils im Fettdruck angegeben und können auch als $\bar{h}$ und $\bar{d}$ angegeben werden). Die Rusinkiewicz-Parametrisierung ist in dem Beitrag "A New Change of Variables for Efficient BRDF Representation" Szymon M. Rusinkiewicz, Stanford University detailliert beschrieben, der z.B. unter der Internetadresse https://www.cs.princeton.edu/~smr/papers/brdf_change_of_variables/ herunterladbar ist, und wurde 1998 im Eurographics Workshop on Rendering vorgestellt.

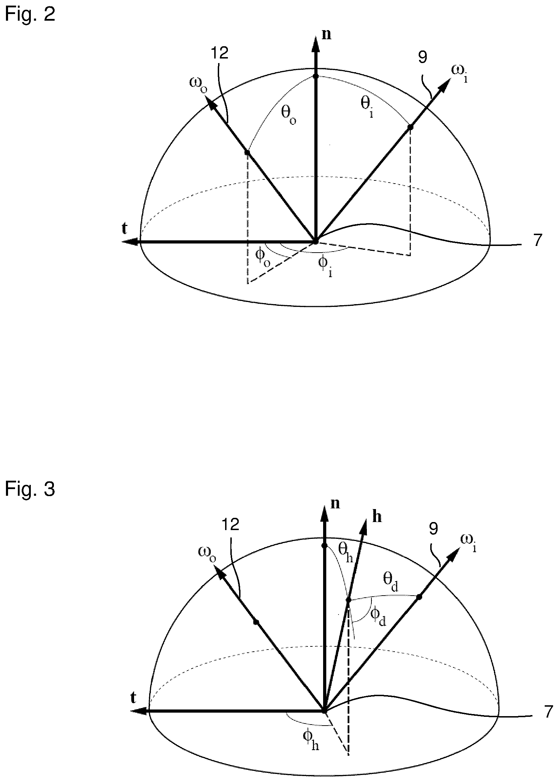

Diese Parametrisierung wird ausgehend von einer schematisch in Fig. 2 dargestellten Reflexion der einfallenden Lichtstrahl 9 (der entgegen der gezeigten Pfeilrichtung verläuft) an einem Punkt der Oberfläche 7, was zu einem reflektierten Lichtstrahl 12 führt und in Fig. 2 in Kugelkoordinaten dargestellt ist, in Verbindung mit Fig. 3 verdeutlicht, da in Fig. 3 dieselbe Reflexion in der Rusinkiewicz-Parametrisierung dargestellt ist.

In Fig. 2 ist der einfallende Lichtstrahl 9 mit den Kugelkoordinaten $\theta_i$ und $\Phi_i$ bezogen auf die Oberflächennormale n und die Oberflächentangente t eindeutig beschrieben. Der reflektierte Lichtstrahl 12 weist die Winkel $\theta_o$ und $\Phi_o$ auf.

Nach der Rusinkiewicz-Parametrisierung wird diese Reflexion durch die transformierten Koordinatenachsen $\theta_h$, $\Phi_h$, $\theta_d$, $\Phi_d$·beschrieben. Weitere Details ergeben sich aus der nachfolgenden Beschreibung der Vektoren.

n = $\bar{n}$ = Oberflächennormale
t = $\bar{t}$ = Oberflächentangente
b = $\bar{b}$ = Oberflächenbinormale (d. h. n x t)
$\omega_i$ = $\overline{\omega_i}$ = sphärische Koordinaten $\Theta_i$ und $\Phi_i$
$\omega_o$ = $\overline{\omega_o}$ = sphärische Koordinaten $\Theta_o$ und $\Phi_o$

$$h = \vec{h} = \frac{\vec{\omega_i} + \vec{\omega_o}}{\|\vec{\omega_i} + \vec{\omega_o}\|} = sph\ddot{a}rische\ Koordinaten\ \Theta_h\ und\ \Phi_h$$

$$d = \vec{d} = rot_{\vec{b},-\Theta_h}\, rot_{\vec{n},-\Phi_h}\, \vec{\omega_i} = sph\ddot{a}rische\ Koordinaten\ \Theta_d\ und\ \Phi_d$$

$\Theta_h$ und $\Phi_h$ sind die sphärischen Koordinaten des Mittelvektors h im t-n-b System und die zwei Rotationen für d bringen den Mittelvektor h zum Nordpol und sind die sphärischen Koordinaten $\Theta_i$ und $\Phi_i$ des einfallenden Strahls 9 in diesem transformierten System (weitere Details sind in der Literaturstelle [1] sowie dem genannten Rusinkiewicz Beitrag "A New Change of Variables for Efficient BRDF Representation" zu entnehmen).

Erfindungsgemäß wurde festgestellt, dass die BRDF-Werte von vielen in der Praxis vorkommenden Materialien eine starke Änderung in der $\theta_h$-Richtung und eine geringere Änderung entlang der übrigen Koordinatenachsen $\theta_d$, $\Phi_h$ und $\Phi_d$ aufweisen. Daher wird der von der Rusinkiewicz-Parametrisierung aufgespannte Raum mittels einer Gitterstruktur diskretisiert, wobei entlang der $\theta_h$-Richtung ein geringerer Gitterabstand gewählt wird als für die Richtungen der übrigen Koordinatenachsen, da entlang der $\theta_h$-Richtung mit größeren Änderungen des Reflektanzverhaltens zu rechnen ist. Das Ergebnis ist eine "Winkeltabelle", welche eine Reihe von für das Reflektanzverhalten wichtigen Winkelkonfigurationen aus Lichteinfallsrichtung und Beobachtungsrichtung enthält. Die Anzahl der Einträge ist hierbei über die Feinheit der Diskretisierung des Raums geregelt. Wie in der nachfolgenden beispielhaften Winkeltabelle gezeigt ist, wird der Winkel $\theta_h$ in 10°-Schritten variiert, so dass neun Bereiche vorliegen. Für die Winkel $\Phi_h$ $\theta_d$ und $\Phi_d$ wird keine Unterteilung durchgeführt, so dass jeweils ein einziger Bereich vorliegt. Hiermit ergibt sich eine Winkeltabelle mit 9 · 1 · 1 · 1= 9 Einträgen, wie nachfolgend dargestellt ist.

Winkeltabelle:

| Index | $\Theta_h$ | $\Phi_h$ | $\Theta_d$ | $\Phi_d$ |
|-------|-----------|----------|-----------|----------|
| 0 | [0°-10°] | [0°-180°] | [0°-90°] | [0°-180°] |

(fortgesetzt)

| Index | $\Theta_h$ | $\Phi_h$ | $\Theta_d$ | $\Phi_d$ |
|---|---|---|---|---|
| 1 | [10°-20°] | [0°-180°] | [0°-90°] | [0°-180°] |
| 2 | [20°-30°] | [0°-180°] | [0°-90°] | [0°-180°] |
| 3 | [30°-40°] | [0°-180°] | [0°-90°] | [0°-180°] |
| 4 | [40°-50°] | [0°-180°] | [0°-90°] | [0°-180°] |
| 5 | [50°-60°] | [0°-180°] | [0°-90°] | [0°-180°] |
| 6 | [60°-70°] | [0°-180°] | [0°-90°] | [0°-180°] |
| 7 | [70°-80°] | [0°-180°] | [0°-90°] | [0°-180°] |
| 8 | [80°-90°] | [0°-180°] | [0°-90°] | [0°-180°] |

Für jeden der neun Einträge der Winkeltabelle sind nun die zugeordneten BRDF-Werte der entsprechenden Oberflächenpunkte gesucht und werden diesen Einträgen zugeordnet. Diese Kombination aus diskreten Winkeln (entsprechend der Einträge aus der Winkeltabelle) mit den zugehörigen BRDF-Werten wird nachfolgend auch BRDF-Tabelle genannt. Für den Indexwert 2 gemäß der Winkeltabelle ist schematisch eine BRDF-Tabelle angegeben, wobei zur Vereinfachung der Beschreibung von 25 Punkten der Oberfläche 7 mit den Koordinaten K1 und K2 ausgegangen wird und Messwerte nur dann vorliegen, wenn kein "-" in der entsprechenden Spalte "Wert" eingetragen ist.

| Index = 2 (gemessen) | | | | | | | | | | | | | | |
|---|---|---|---|---|---|---|---|---|---|---|---|---|---|---|
| K1 | K2 | Wert | K1 | K2 | Wert | K1 | K2 | Wert | K1 | K2 | Wert | K1 | K2 | Wert |
| 1 | 1 | W11 | 2 | 1 | - | 3 | 1 | W31 | 4 | 1 | - | 5 | 1 | - |
| 1 | 2 | - | 2 | 2 | W22 | 3 | 2 | - | 4 | 2 | W42 | 5 | 2 | - |
| 1 | 3 | W13 | 2 | 3 | W23 | 3 | 3 | - | 4 | 3 | W43 | 5 | 3 | W53 |
| 1 | 4 | - | 2 | 4 | - | 3 | 4 | - | 4 | 4 | - | 5 | 4 | - |
| 1 | 5 | - | 2 | 5 | - | 3 | 5 | - | 4 | 5 | - | 5 | 5 | W55 |

Da jeder Punkt der Oberfläche 7 somit einen BRDF-Wert in einer der BRDF-Tabellen liefert, werden nach der Messung nicht alle BRDF-Tabellen vollständig gefüllt sein, wie dies schematisch für die BRDF-Tabelle mit dem Index = 2 gezeigt ist, da in der Praxis pro Oberflächenpunkt nur eine kleine Anzahl charakteristischer Winkelkonfigurationen gemessen wird.

Es werden daher ausgehend von den gemessenen BRDF-Werten die nicht gemessenen BRDF-Werte bestimmt und damit die BRDF-Tabellen komplettiert. Hierbei kann dieses Problem als ein "Scattered Data Interpolation"-Problem behandelt werden. Eine Grundidee ist es dabei, dass pro Oberflächenpunkt unbekannte (nicht gemessene) BRDF-Werte mittels anderer bekannter (gemessener) BRDF-Werten aus den übrigen BRDF-Tabellen bestimmt werden, wenn davon ausgegangen werden kann, dass die Oberfläche 7 ähnlich reagiert.

Daher wird pro bekanntem BRDF-Wert ein Ähnlichkeitsmaß zu allen anderen unbekannten BRDF-Werten aller BRDF-Tabellen anhand der folgenden Betrachtung bestimmt:

1) Ähnlichkeit der Winkelkonfiguration. Wie hoch ist die Distanz der Winkelkonfiguration zum unbekannten Eintrag? Dabei zeigt eine niedrige Distanz eine hohe Ähnlichkeit an.

2) Es wird die räumliche Distanz berücksichtigt. Wie weit ist somit auf der Oberfläche 7 der unbekannte Eintrag entfernt? Je niedriger die Distanz ist, umso höher ist die Ähnlichkeit.

3) Es wird die photometrische Ähnlichkeit berücksichtigt. Wie sehr ähneln sich die jeweiligen BRDF-Tabellen der jeweiligen Einträge. Eine niedrige Distanz zeigt dabei eine hohe Ähnlichkeit an.

Unbekannte BRDF-Werte werden somit mittels bekannter BRDF-Werte ermittelt (beispielsweise durch ein gewichtetes Mittel oder andere Interpolationstechniken), welche bezüglich der vorangegangenen drei Betrachtungen eine hohe Ähnlichkeit aufweisen. Es ist ebenfalls möglich, dass gemessene BRDF-Werte auf ähnliche Weise korrigiert werden können, um z.B. eine Glättung durchzuführen. Auf diese Weise werden die unbekannten BRDF-Werte gefüllt und somit wird die gesamte SVBRDF bestimmt, ohne eine Anzahl von Basismaterialien bestimmen zu müssen.

Die für Index = 2 gefüllte BRDF-Tabelle ist nachfolgend dargestellt:

| Index = 2 (vervollständigt) | | | | | | | | | | | | | | |
|---|---|---|---|---|---|---|---|---|---|---|---|---|---|---|
| K1 | K2 | Wert | K1 | K2 | Wert | K1 | K2 | Wert | K1 | K2 | Wert | K1 | K2 | Wert |
| 1 | 1 | W11 | 2 | 1 | W21 | 3 | 1 | W31 | 4 | 1 | W41 | 5 | 1 | W51 |
| 1 | 2 | W12 | 2 | 2 | W22 | 3 | 2 | W32 | 4 | 2 | W42 | 5 | 2 | W52 |
| 1 | 3 | W13 | 2 | 3 | W23 | 3 | 3 | W33 | 4 | 3 | W43 | 5 | 3 | W53 |
| 1 | 4 | W14 | 2 | 4 | W24 | 3 | 4 | W34 | 4 | 4 | W44 | 5 | 4 | W54 |
| 1 | 5 | W15 | 2 | 5 | W25 | 3 | 5 | W35 | 4 | 5 | W45 | 5 | 5 | W55 |

Jede Zeile einer BRDF-Tabelle kann auch als Datensatz DS mit mindestens einem Eintrag (z.B. Reflektanzwert sowie eine zugeordnete Aufnahmerichtung und eine zugeordnete Beleuchtungsrichtung) bezeichnet werden, wobei jeder Datensatz jeweils einem Punkt der Oberfläche 7 des Objektes 6 zugeordnet ist.

Es kann dann noch eine kontinuierliche SVBRDF basierend auf den gefüllten BRDF-Tabellen ermittelt werden. Dies ist beispielsweise durch multivariante Interpolation oder Parameterschätzung eines parametrisierten BRDF-Modells möglich.

**Patentansprüche**

1. Computerimplementiertes Verfahren zur Bestimmung des Reflektanzverhaltens einer Oberfläche (7) eines Objektes (6), mit den Schritten:

   - Bereitstellen von mehreren Bildern des Objektes (6), die sich in einer Aufnahmerichtung und/oder in einer Beleuchtungsrichtung bei der Aufnahme unterscheiden, und
   - Erstellen von Datensätzen mit Einträgen, die jeweils einen aus den Bildern abgeleiteten Reflektanzwert sowie eine zugeordnete Aufnahmerichtung und eine zugeordnete Beleuchtungsrichtung beschreiben, wobei jeder Datensatz jeweils einem Punkt der Oberfläche (7) des Objektes (6) zugeordnet ist,

   **gekennzeichnet durch** den Schritt:

   - Ermitteln fehlender Einträge der Datensätze basierend auf Einträgen bereits erstellter Datensätze.

2. Computerimplementiertes Verfahren nach Anspruch 1, **dadurch gekennzeichnet, dass** beim Ermitteln fehlender Einträge der Datensätze ein Ähnlichkeitsmaß zu den aus den Bildern abgeleiteten Reflektanzwerten berücksichtigt wird.

3. Computerimplementiertes Verfahren nach Anspruch 2, **dadurch gekennzeichnet, dass** als Ähnlichkeitsmaß mindestens eines ausgewählt aus der Gruppe von Ähnlichkeit der Winkelkonfiguration, räumlicher Distanz über die Oberfläche (7) und photometrischer Ähnlichkeit berücksichtigt wird.

4. Computerimplementiertes Verfahren nach Anspruch 3, **dadurch gekennzeichnet, dass** bei der Ähnlichkeit der Winkelkonfiguration die Ähnlichkeit mit Abnahme der Distanz zunimmt, bei der räumlichen Distanz die Ähnlichkeit umso höher wird, je niedriger die Distanz ist, und bei der photometrischen Ähnlichkeit die Ähnlichkeit mit abnehmender Distanz steigt.

5. Computerimplementiertes Verfahren nach einem der obigen Ansprüche, **dadurch gekennzeichnet, dass** beim Ermitteln fehlender Einträge der Datensätze eine Mittelwertberechnung oder eine gewichtete Mittelwertberechnung der aus den Bildern abgeleiteten Reflektanzwerten durchgeführt wird.

6. Computerimplementiertes Verfahren nach einem der obigen Ansprüche, **dadurch gekennzeichnet, dass** beim Ermitteln fehlender Einträge der Datensätze eine Glättung der aus den Bildern abgeleiteten Reflektanzwerten durchgeführt wird.

7. Computerimplementiertes Verfahren nach einem der obigen Ansprüche, **dadurch gekennzeichnet, dass** die Datensätze so parametrisiert werden, dass ein vierdimensionaler Winkelanteil mit zwei Parametern für die Beleuchtungsrichtung und zwei Parametern für die Aufnahmerichtung. vorliegt.

8. Computerimplementiertes Verfahren nach einem der obigen Ansprüche, **dadurch gekennzeichnet, dass** das Objekt (6) mindestens eines ist, ausgewählt aus einer Gruppe, die ein Brillenglas, eine Brillenfassung und eine Brille umfasst.

9. Computerimplementiertes Verfahren nach einem der obigen Ansprüche, **dadurch gekennzeichnet, dass** zur Kalibrierung mindestens eine der Schrittfolgen

   a) Auswerten mindestens einer ersten Kalibrieraufnahme eines Kalibrierobjektes mit mehreren unterscheidbaren Markern an relativ zueinander bekannten Positionen,

   Auswerten mindestens einer zweiten Kalibrieraufnahme des Kalibrierobjektes, das bei der Aufnahme mit einem Muster beleuchtet war, und
   Durchführen der Kalibrierung basierend auf den Auswertungen der ersten und zweiten Kalibrieraufnahme(n),
   oder

   b) Auswerten mindestens einer dritten Kalibrieraufnahme eines Kalibrierobjektes mit mehreren unterscheidbaren Kugeln an relativ zueinander bekannten Positionen, wobei die Mittelpunkte der Kugeln bestimmt werden, und

   Durchführen der Kalibrierung basierend auf der bzw. den Auswertung(en) der dritten Kalibrieraufnahme(n), durchgeführt wird.

10. Computerimplementiertes Verfahren nach einem der obigen Ansprüche, **dadurch gekennzeichnet, dass** für eine Kalibrierung mindestens eine vierte Kalibrieraufnahme eines Kalibrierobjektes ausgewertet wird, wobei das Kalibrierobjekt mindestens eine der folgenden Eigenschaften aufweist:

    - das Kalibrierobjekt weist ein nichtrepetitives Muster auf, wodurch charakteristische Merkmale der Oberfläche des Kalibrierobjekts vorgegeben sind,
    - das Kalibrierobjekt weist eine variierbare Größe auf,
    - das Kalibrierobjekt weist mehrere Kalibrierkörper mit verschiedenen Größen auf,
    - das Kalibrierobjekt weist eine Farbtafel zur Farbkalibrierung von Kameras zur Erzeugung der Aufnahmen auf, und
    - das Kalibrierobjekt weist charakteristische Merkmale mit bekannter Skalierung und/oder bekannten relativen Abständen zueinander auf.

11. Computerimplementiertes Verfahren nach einem der obigen Ansprüche, **dadurch gekennzeichnet, dass**

    III) für eine Kalibrierung mindestens einer Kamera-Projektor-Kombination ein Kalibrierobjektes mit mindestens einer Kamera mindestens einer Kamera-Projektor-Kombination(en) aufgenommen wird,
    IV) mindestens einer der Projektoren Kamera-Projektor-Kombination(en) ein oder mehrere Muster auf das Kalibrierobjekt projiziert, welche von der mindestens einen Kamera der Kamera-Projektor-Kombination(en) aufgenommen wird,
    V) wobei basierend auf den Aufnahmen der mindestens einen Kamera der Kamera-Projektor-Kombination(en) eine Kalibrierung der mindestens einen Kamera der Kamera-Projektor-Kombination(en) und/oder des mindestens einen Projektors der Kamera-Projektor-Kombination(en) durchgeführt wird,
    wobei bevorzugt mindestens eine der folgenden Schrittfolgen durchgeführt wird:

       - Ändern der relativen Positionierung vom Kalibrierobjekt zur mindestens einen Kamera der Kamera-Projektor-Kombination nach Durchführen der Schrittfolgen III) und IV) und danach erneutes Durchführen der Schrittfolgen III) und IV), und
       - Durchführen einer Kalibrierung einer Kameraresponse-Kurve der mindestens einen Kamera der Kamera-Projektor-Kombination(en) basierend auf Aufnahmen mit unterschiedlichen Belichtungszeiten.

**12.** Computerimplementiertes Verfahren nach einem der obigen Ansprüche, **dadurch gekennzeichnet, dass** zur Erstellung der Datensätze eine bidirektionalen Reflektanzdistributionsfunktion (BRDF), die für jeden Punkt der Oberfläche (7) des Objekts (6) für mögliche Lichteinfallswinkel eines einfallenden Strahls (9) jeweils die Menge an reflektiertem Licht eines ausfallenden Strahls (12) in jede mögliche Beobachtungsrichtung jeweils als BRDF-Wert beschreibt, bereitgestellt wird, so dass die Reflektanzdistributionsfunktion (BRDF) eine sechsdimensionale Funktion ist, die einen vierdimensionalen Winkelanteil mit zwei Parametern für die Lichteinfallsrichtung und zwei Parametern für die Beobachtungsrichtung sowie einen zweidimensionalen Ortsanteil mit zwei Parametern für den entsprechenden Punkt der Oberfläche (7) des Objekts (6) aufweist.

**13.** Computerimplementiertes Verfahren nach Anspruch 10, **gekennzeichnet durch** folgende Schritte:

- Parametrisieren des vierdimensionalen Winkelanteils der Reflektanzdistributionsfunktion (SVBRDF) mittels einer Rusinkiewicz-Parametrisierung so, dass als transformierte Koordinatenachsen Polarwinkel ($\Theta_h$) und Azimutwinkel ($\Phi_h$) eines Mittelvektor ($\bar{h}$) und Polarwinkel ($\Theta_d$) und Azimutwinkel ($\Phi_d$) eines Differenzvektors ($\bar{d}$) vorliegen, wobei der Mittelvektor (h) der mittlere Vektor zwischen einfallendem Strahl (9) und ausfallendem Strahl (12) und der Differenzvektor ($\bar{d}$) die Differenz von einfallendem Strahl (9) und Mittelvektor ($\bar{h}$) ist,
- Diskretisieren des von den transformierten Koordinatenachsen aufgespannten Raums mittels einer Koordinaten-Gitterstruktur mit Gitterpunkten, wobei der Gitterabstand für die Koordinatenachse Polarwinkel ($\Theta_h$) des Mittelvektors ($\bar{h}$) geringer ist als für die restlichen transformierten Koordinatenachsen ($\Theta_h$, $\Theta_d$, $\Phi_d$).

**14.** Computerprogramm zur Bestimmung des Reflektanzverhaltens einer Oberfläche (7) eines Objektes (6) basierend auf mehreren bereitgestellten Bildern des Objektes (6), die sich in einer Aufnahmerichtung und/oder Beleuchtungsrichtung bei der Aufnahme unterscheiden,
**dadurch gekennzeichnet, dass**
das Computerprogramm Instruktionen umfasst, die, wenn sie auf einem Computer ausgeführt werden, den Computer dazu veranlassen,

- Datensätze mit Einträgen zu erstellen, die jeweils einen aus den Bildern abgeleiteten Reflektanzwert sowie eine zugeordnete Aufnahmerichtung und eine zugeordnete Beleuchtungsrichtung beschreiben, wobei jeder Datensatzes jeweils einem Punkt der Oberfläche (7) des Objektes (6) zugeordnet ist, und - fehlende Einträge der Datensätze basierend auf Einträgen bereits erstellter Datensätze zu ermitteln.

**15.** Datenverarbeitungssystem zur Bestimmung des Reflektanzverhaltens einer Oberfläche (7) eines Objektes (6) basierend auf mehreren bereitgestellten Bildern des Objektes (6), die sich in einer Aufnahmerichtung und/oder Beleuchtungsrichtung bei der Aufnahme unterscheiden, wobei das Datenverarbeitungssystem einen Prozessor und einen Speicher umfasst,
**dadurch gekennzeichnet, dass**
der Prozessor dazu ausgestaltet ist, basieren auf Instruktionen eines im Speicher gespeicherten Computerprogramms

- Datensätze mit Einträgen zu erstellen, die jeweils einen aus den Bildern abgeleiteten Reflektanzwert sowie eine zugeordnete Aufnahmerichtung und eine zugeordnete Beleuchtungsrichtung beschreiben, wobei jeder Datensatzes jeweils einem Punkt der Oberfläche (7) des Objektes (6) zugeordnet ist, und - fehlende Einträge der Datensätze basierend auf Einträgen bereits erstellter Datensätze zu ermitteln.

**16.** Nichtflüchtiges computerlesbares Speichermedium mit darauf gespeicherten Instruktionen zur Bestimmung des Reflektanzverhaltens einer Oberfläche (7) eines Objektes (6) basierend auf mehreren bereitgestellten Bildern des Objektes (6), die sich in einer Aufnahmerichtung und/oder Beleuchtungsrichtung bei der Aufnahme unterscheiden,
**dadurch gekennzeichnet, dass**
die Instruktionen, wenn sie auf einem Computer ausgeführt werden, den Computer dazu veranlassen,

- Datensätzen mit Einträgen zu erstellen, die jeweils einen aus den Bildern abgeleiteten Reflektanzwert sowie eine zugeordnete Aufnahmerichtung und eine zugeordnete Beleuchtungsrichtung beschreiben, wobei jeder Datensatzes jeweils einem Punkt der Oberfläche (7) des Objektes (6) zugeordnet ist, und - fehlende Einträge der Datensätze basierend auf Einträgen bereits erstellter Datensätze zu ermitteln.

**17.** Vorrichtung (1) zur Bestimmung des Reflektanzverhaltens einer Oberfläche (7) eines Objekts (6), wobei die Vorrichtung (1) eine Steuereinheit (2) und eine Detektionseinheit (4) umfasst, wobei die Detektionseinheit (4) mehrere Bilder des Objekts (6) aufnimmt, die sich in einer Aufnahmerichtung und/oder einer Beleuchtungsrichtung bei der Aufnahme unterscheiden, und wobei die Steuereinheit (2) Datensätze mit Einträgen erstellt, die jeweils einen aus den Bildern abgeleiteten Reflektanzwert sowie eine zugeordnete Aufnahmerichtung und eine zugeordnete Beleuchtungsrichtung beschreiben, wobei jeder Datensatz jeweils einem Punkt der Oberfläche (7) des Objekts (6) zugeordnet ist,

**dadurch gekennzeichnet, dass**

die Steuereinheit (2) fehlende Einträge der Datensätze basierend auf Einträgen bereits erstellter Datensätze ermittelt.

Fig. 1

Fig. 2

Fig. 3

**EUROPÄISCHER RECHERCHENBERICHT**

Nummer der Anmeldung

EP 22 15 8278

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Nielsen J B: "On Practical Sampling of Bidirectional Reflectance", PhD Thesis, 2016, Seiten 1-163, XP055885310, Gefunden im Internet: URL:https://core.ac.uk/download/pdf/84000234.pdf [gefunden am 2022-01-31] | 1,7, 12-17 | INV. G01N21/27 G01N21/55 G06T15/00 G06T17/00 ADD. G01N21/47 |
| Y | * Seite 15 * | 8-11 | |
| A | * Seiten 17, 18 * * Seiten 22, 23 * * Seiten 33, 34 * ----- | 2-6 | |
| Y | TUNWATTANAPONG BOROM ET AL: "Acquiring reflectance and shape from continuous spherical harmonic illumination", ACM TRANSACTIONS ON GRAPHICS, Bd. 32, Nr. 4, 21. Juli 2013 (2013-07-21), Seiten 1-12, XP055945063, US ISSN: 0730-0301, DOI: 10.1145/2461912.2461944 * Zusammenfassung; Abbildungen 1, 12 * ----- | 8 | |
| Y | US 2014/268160 A1 (DEBEVEC PAUL E [US] ET AL) 18. September 2014 (2014-09-18) * Absätze [0042], [0043], [0068] * * Abbildungen 2A, 2C, 9 * ----- | 8 | RECHERCHIERTE SACHGEBIETE (IPC) G01N G06T |

-/--

Der vorliegende Recherchenbericht wurde für alle Patentansprüche erstellt

| Recherchenort | Abschlußdatum der Recherche | Prüfer |
|---|---|---|
| München | 26. September 2022 | Hoogen, Ricarda |

EPO FORM 1503 03.82 (P04C03)

Seite 1 von 2

EUROPÄISCHES PATENTAMT
European Patent Office
Office européen des brevets

# EUROPÄISCHER RECHERCHENBERICHT

Nummer der Anmeldung

EP 22 15 8278

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | AUDET S ET AL: "A user-friendly method to geometrically calibrate projector-camera systems", COMPUTER VISION AND PATTERN RECOGNITION WORKSHOPS, 2009. CVPR WORKSHOPS 2009. IEEE COMPUTER SOCIETY CONFERENCE ON, IEEE, PISCATAWAY, NJ, USA, 20. Juni 2009 (2009-06-20), Seiten 47-54, XP031606973, ISBN: 978-1-4244-3994-2 * Seite 48 – Seite 50 * ----- | 9-11 | |
| Y | MICHAEL WEINMANN ET AL: "Advances in geometry and reflectance acquisition (course notes)", 20151102; 1077952576 – 1077952576, 2. November 2015 (2015-11-02), Seiten 1-71, XP058075388, DOI: 10.1145/2818143.2818165 ISBN: 978-1-4503-3924-7 * Abschnitt 3.1.2 * ----- | 9 | |
| Y | TIM WEYRICH ET AL: "Principles of appearance acquisition and representation", 20080811; 1077952576 – 1077952576, 11. August 2008 (2008-08-11), Seiten 1-119, XP058345154, DOI: 10.1145/1401132.1401234 * Abschnitte 2.4 und 5.3.1 * ----- | 9-11 | RECHERCHIERTE SACHGEBIETE (IPC) |
| Y | US 2016/275720 A1 (DEHAIS CHRISTOPHE [FR] ET AL) 22. September 2016 (2016-09-22) * Absätze [0014] – [0017], [0023], [0184] – [0202] * * Abbildungen 10, 11 * ----- | 9 | |

Der vorliegende Recherchenbericht wurde für alle Patentansprüche erstellt

| Recherchenort | Abschlußdatum der Recherche | Prüfer |
|---|---|---|
| München | 26. September 2022 | Hoogen, Ricarda |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................
& : Mitglied der gleichen Patentfamilie, übereinstimmendes Dokument

EPO FORM 1503 03.82 (P04C03)

Europäisches
Patentamt

European
Patent Office

Office européen
des brevets

---

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

---

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

**Siehe Ergänzungsblatt B**

☒ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches
Patentamt

European
Patent Office

Office européen
des brevets

## MANGELNDE EINHEITLICHKEIT
## DER ERFINDUNG
## ERGÄNZUNGSBLATT B

**Nummer der Anmeldung**

**EP 22 15 8278**

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-7, 12-17

Computerimplementiertes Verfahren nach Anspruch 1, wobei bei der Ermittlung fehlender Einträge der Datensätze einer der in den Ansprüchen 2-6 definierten Schritte durchgeführt wird, oder wobei die Datensätze wie in einem der Ansprüche 7, 12, 13 parametrisiert werden. Dem Anspruch 1 entsprechendes Computerprogramm nach Anspruch 14, Datenverarbeitungssystem nach Anspruch 15, Speichermedium nach Anspruch 16, Vorrichtung nach Anspruch 17.

---

2. Anspruch: 8

Computerimplementiertes Verfahren nach Anspruch 1, wobei das Objekt ein Brillenglas, eine Brillenfassung oder eine Brille ist.

---

3. Ansprüche: 9-11

Computerimplementiertes Verfahren nach Anspruch 1, wobei eine Kalibrierung mit den in den Ansprüchen 9-11 definierten Schritten durchgeführt wird.

---

**ANHANG ZUM EUROPÄISCHEN RECHERCHENBERICHT
ÜBER DIE EUROPÄISCHE PATENTANMELDUNG NR.**

EP 22 15 8278

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-09-2022

| Im Recherchenbericht angeführtes Patentdokument | Datum der Veröffentlichung | Mitglied(er) der Patentfamilie | Datum der Veröffentlichung |
|---|---|---|---|
| US 2014268160 A1 | 18-09-2014 | US 2014268160 A1 | 18-09-2014 |
| | | WO 2014153022 A1 | 25-09-2014 |
| US 2016275720 A1 | 22-09-2016 | EP 2828834 A2 | 28-01-2015 |
| | | EP 3401879 A1 | 14-11-2018 |
| | | US 2014055570 A1 | 27-02-2014 |
| | | US 2016275720 A1 | 22-09-2016 |
| | | WO 2013139814 A2 | 26-09-2013 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **NICODEMUS, FRED E.** Directional reflectance and emissivity of an opaque surface. *Applied Optics,* 04. Juli 1965, 767-773
- **GEORGHIDIADES, ATHINODOROS S.** Recovering 3-D shape and reflectance from a small number of photographs. *Proceedings of the 14th Eurographics workshop on Rendering. Eurographics Association,* 2003, 230-240
- Inverse global illumination: Recovering reflectance models of real scenes from photographs. **YU, YIZHOU et al.** Proceedings of the 26th annual conference on Computer graphics and interactive techniques. ACM Press/Addison-Wesley-Publishing Co, 1999, 215-224
- **LENSCH, HENDRIK et al.** Image-based reconstruction of spatial appearance and geometric detail. *ACM Transactions and Graphis (TOG),* 22. Februar 2003, 234-257
- Shape and spatially-varying brdfs from photometric stereo. **GOLDMANN, DAN B et al.** Pattern Analysis and Maching Intelligence. IEEE Transactions, 1060-1071
- **HOLROYD, MIACHAEL ; LAWRENCE, JASON ; ZICKLER, TODD.** A coaxial optical scanner for synchronous acquisition of 3D geometry and surface reflectance. *ACM Transactions on Graphics (TOG),* 29. April 2010, 99
- **GILJOO NAM ; JOO HO LEE ; DIEGO GUTIERREZ ; MIN H. KIM.** Practical SVBRDF acquisition of 3D objects with unstructured flash photography. *ACM Trans. Graph.,* Dezember 2018, vol. 37.6